# FASCICULE DE BREVET EUROPEEN

(11) **EP 3 273 139 B1**
(45) Date de publication et mention de la délivrance du brevet: **20.11.2019**
(21) Numéro de dépôt: 17178758.3
(22) Date de dépôt: 29.06.2017
(51) Int. Cl.: F17C 13/04

(54) **DISPOSITIF DE FOURNITURE DE FLUIDE**
VORRICHTUNG ZUR FLÜSSIGKEITSZUFÜHRUNG
FLUID SUPPLY DEVICE

(30) Priorité: 20.07.2016 FR 1656907
(43) Date de publication de la demande: 24.01.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FRENAL, Antoine, 95460 EZANVILLE (FR); ONDO, Olivier, 78710 ROSNY SUR SEINE (FR); DE POTTER, Romuald, 95150 TAVERNY (FR); LIGONESCHE, Renaud, 95220 HERBLAY (FR); FISCHER, Benjamin, 94260 Fresnes (FR)
(74) Mandataire: De Cuenca, Emmanuel Jaime

(56) Documents cités:
- FR-A1- 2 970 313
- FR-A1- 2 979 687
- FR-A1- 2 991 751
- FR-A1- 3 022 972
- GB-A- 2 440 268
- US-A1- 2005 126 571

## Description

L'invention concerne un dispositif de fourniture de fluide.

Un tel dispositif est connu de FR3022972A1.

L'invention concerne plus particulièrement un dispositif de fourniture de fluide comprenant un robinet pour fluide sous pression, avec ou sans détendeur de pression intégré, comprenant un corps, un circuit de fluide abrité au moins en partie dans le corps, le circuit ayant une extrémité amont destinée à être mise en relation avec une réserve de fluide sous pression et une extrémité aval destinée à être mise en relation avec un appareil récepteur, le circuit comprenant au moins un organe de contrôle du débit dans le circuit, le robinet comprenant un organe d'actionnement pour commander au moins un organe de contrôle du débit, le moins un organe de contrôle comprenant un régulateur de débit fixe ou réglable.

Pour améliorer les fonctionnalités d'un robinet pour bouteille(s) de fluide sous pression il est connu de prévoir des organes de contrôle du fluide modulaires ou non. Ces organes sont prévus pour coopérer avec un robinet de fluide sous pression pour adapter les fonctionnalités du robinet.

L'adaptation des fonctionnalités de contrôle de débit nécessite de prévoir des éléments modulaires qui satisfont aux exigences de fiabilité, de sécurité et de bon fonctionnement. Les liaisons fluidique et le cas échéant électriques et mécaniques entre différents organes électroniques séparable doivent particulièrement répondre à ces contraintes.

Un but de l'invention est de proposer un robinet ayant une architecture électronique modulaire améliorée.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que le régulateur de débit est situé dans une portion de circuit fluidique logée dans un module de régulation monté de façon amovible sur le corps, le circuit abrité dans le corps comprenant une première extrémité débouchant sur le corps au niveau d'une premier orifice, la portion de circuit de fluide du module de régulation étant munie d'une extrémité amont comprenant un premier raccord fluidique configuré pour se raccorder de façon étanche au niveau du premier orifice lorsque le module est en position montée sur le corps de sorte que le régulateur de débit régule le débit de fluide transitant dans le circuit (3, 13) en amont de l'extrémité aval.

Par ailleurs, des modes de réalisation, dont ceux de l'invention, peuvent comporter l'une ou plusieurs des caractéristiques suivantes :
- le premier raccord fluidique du module de régulation et le premier orifice du corps forment un système connexion fluidique mâle-femelle comprenant un système d'étanchéité tel qu'un joint torique,
- le premier raccord fluidique fait saillie sur le module de régulation et comprend un joint d'étanchéité tel qu'un joint torique,
- l'extrémité aval du circuit débouche sur le module régulateur et est munie d'un raccord de sortie mâle ou femelle,
- le circuit de fluide situé dans le corps comprend une première portion s'étendant entre l'extrémité amont et le premier orifice et une seconde portion s'étendant entre un second orifice débouchant sur le corps et l'extrémité aval, la portion de circuit du module de régulation comprenant une extrémité aval comprenant un second raccord fluidique configuré pour se raccorder de façon étanche au niveau du second orifice lorsque le module de régulation est en position montée sur le corps, de sorte que, lorsque le module de régulation est en position montée sur le corps, la portion de circuit du module de régulation assure une liaison fluidique entre la première portion et la seconde portion du circuit du corps et la régulation du flux de fluide via le régulateur de débit,
- l'extrémité aval débouche sur le corps et est munie d'un raccord de sortie mâle ou femelle,
- le second raccord fluidique du module de régulation et le second orifice du corps forment un système de connexion fluidique mâle-femelle comprenant un système d'étanchéité tel qu'un joint torique,
- le corps du robinet comprend un logement destiné à accueillir le module de régulation, le logement comprenant un fond horizontal lorsque le robinet est en position verticale d'utilisation, le fond étant destiné à recevoir une base du module de régulation lorsque le module de régulation est en position montée sur le corps, le premier orifice débouchant au niveau dudit fond du logement,
- le second orifice débouche au niveau dudit fond du logement,
- le régulateur de débit situé dans le module de régulation est un régulateur de débit variable commandé par un organe électronique d'acquisition et de traitement de données intégré au robinet et comprenant une antenne configurée pour recevoir un signal de commande à distance du régulateur de débit pour contrôler et modifier à distance le débit imposé par ce dernier,
- l'organe électronique d'acquisition et de traitement de données est au moins partiellement logé dans le module de régulation, le dispositif comprenant un capteur de pression configuré pour mesurer la pression dans le circuit dans le corps, ledit capteur de pression étant relié à un raccord électrique débouchant sur le corps dans le logement, le module de régulation comprenant sur sa surface extérieur un raccord électrique conjugué relié à l'organe électronique d'acquisition et de traitement de données et configuré pour transmettre l'information de mesure du capteur de pression vers l'organe électronique d'acquisition et de traitement de données lorsque le module de régulation est en position montée sur le corps,
- le module de régulation est maintenu sur le corps par encliquetage et/ou par des organes de maintien amovibles tel qu'un système de vis et écrou(s) ou taraudage,
- le régulateur de débit comprend au moins l'un parmi : un orifice calibré fixe, un orifice à taille réglable,
- le régulateur de débit comprend un mécanisme d'orifice variable de type piezoélectrique,
- le régulateur de débit comprend un mécanisme d'orifice variable à tiroir mobile,
- le robinet comprend au moins un premier organe fonctionnel électronique destiné à échanger des données avec un organe électronique du module de régulation, le corps du robinet comprenant un dispositif de contact(s) situés dans le logement destiné à coopérer avec un jeu de contact(s) électrique(s) conjugué situé sur le module de régulation lorsque ce dernier est en position montée sur le corps du robinet,
- le module de régulation est mobile en translation selon une première direction par rapport au logement entre une position montée et une position démontée par rapport au corps, le dispositif de contact(s) étant disposé sur une paroi du logement située dans un plan parallèle à ladite première direction, de sorte que le contact entre le dispositif de contact(s) et le jeu de contact(s) électrique(s) conjugué s'effectue selon un plan parallèle à la première direction,
- le robinet comprend une extrémité de montage comprenant des organes mobiles d'accrochage destinés à coopérer avec des organes d'accrochage complémentaires pour former un système de connexion rapide du robinet sur un autre robinet ou sur un circuit de fluide, le robinet comprenant une pièce support mobile formant un organe d'actionnement des organes mobiles d'accrochage tel qu'un un organe de verrouillage et/ou de déverrouillage des organes mobiles d'accrochage,
- le robinet est raccordable fluidiquement à un autre robinet dit « robinet de base » éventuellement solidaire d'au moins une bouteille de fluide sous pression, le robinet comprenant un organe mobile (tel qu'un pousse-clapet) dont le déplacement est commandé par l'organe d'actionnement pour commander l'ouverture ou la fermeture d'un clapet d'isolation du robinet de base sur lequel est raccordé de façon amovible ledit robinet,
- l'organe d'actionnement comprend au moins l'un parmi, un volant rotatif, un bouton poussoir, un levier pivotant sur le corps.

L'invention concerne également un module de régulation de débit de gaz destiné à être relié de façon amovible au corps d'un robinet pour fluide sous pression d'un dispositif conforme à l'une quelconque des caractéristiques ci-dessus ou ci-après, comprenant un boîtier abritant un circuit fluidique comprenant une première extrémité amont débouchant sur le corps au niveau d'une premier orifice et une seconde extrémité aval débouchant au niveau d'un orifice aval, le circuit comprenant un régulateur de débit destiné à réguler le débit de fluide circulant dans ledit circuit, le premier orifice débouchant sur une face horizontale inférieure du boîtier et comprenant un premier raccord fluidique configuré pour se raccorder de façon étanche au niveau d'un orifice conjugué d'un robinet, le boîtier étant muni d'organe(s) d'accrochage par encliquetage et/ou configurés pour coopérer avec un système de vis et écrou(s) ou taraudage pour assurer le montage du boîtier sur un robinet.

Selon d'autres particularités possibles :
- le circuit du module de régulation comprend une extrémité aval comprenant un second raccord fluidique configuré pour se raccorder de façon étanche au niveau du second orifice, le second raccord étant situé sur la face horizontale inférieure du boîtier,
- le régulateur de débit est un régulateur de débit variable commandé par un organe électronique d'acquisition et de traitement de données intégré au robinet et comprenant une antenne configurée pour recevoir un signal de commande à distance du régulateur de débit pour contrôler et modifier à distance le débit imposé par ce dernier,

L'invention peut concerner également une bouteille ou un ensemble de bouteilles de fluide sous pression (cadre) comprenant un tel dispositif.

L'invention peut concerner également tout dispositif ou procédé alternatif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 représente une vue en perspective, schématique et partielle, illustrant un exemple de réalisation d'un robinet selon l'invention dans une position démontée,
- la figure 2 représente une vue en perspective, schématique et partielle et de dessous, illustrant un exemple de réalisation d'un exemple de module de régulation destiné à être associé au robinet de la figure 1,
- les figures 3 et 4 représentent des vues de côté, schématiques et partielles, illustrant respectivement deux autres exemples de réalisation de modules de régulation susceptibles d'être associés au robinet de la figure 1,
- les figures 5 et 6 représentent des vues de côté, schématiques et partielles, illustrant un autre exemple de réalisation d'un robinet selon respectivement deux configurations distinctes (respectivement montée et démontée),
- la figure 7 représente une vue de côté, schématique et partielle, illustrant un autre exemple de réalisation d'un robinet selon l'invention,
- la figure 8 représente une vue de côté, schématique et partielle, illustrant un autre exemple de réalisation d'un robinet selon l'invention,
- la figure 9 représente une vue de côté, schématique et partielle, illustrant un autre exemple de réalisation d'un module de régulation pour robinet selon l'invention,
- la figure 10 représente une vue de côté, schématique et partielle, illustrant un exemple de réalisation et d'utilisation d'un dispositif selon l'invention,
- la figure 11 représente une vue en perspective, schématique et partielle et de dessous, illustrant un autre exemple de réalisation d'un exemple de module de régulation destiné à être associé au robinet de la figure 1 notamment.

Le robinet 1 illustré aux figures comprend un corps 2 abritant au moins une partie 3 d'un circuit 3, 13 de fluide.

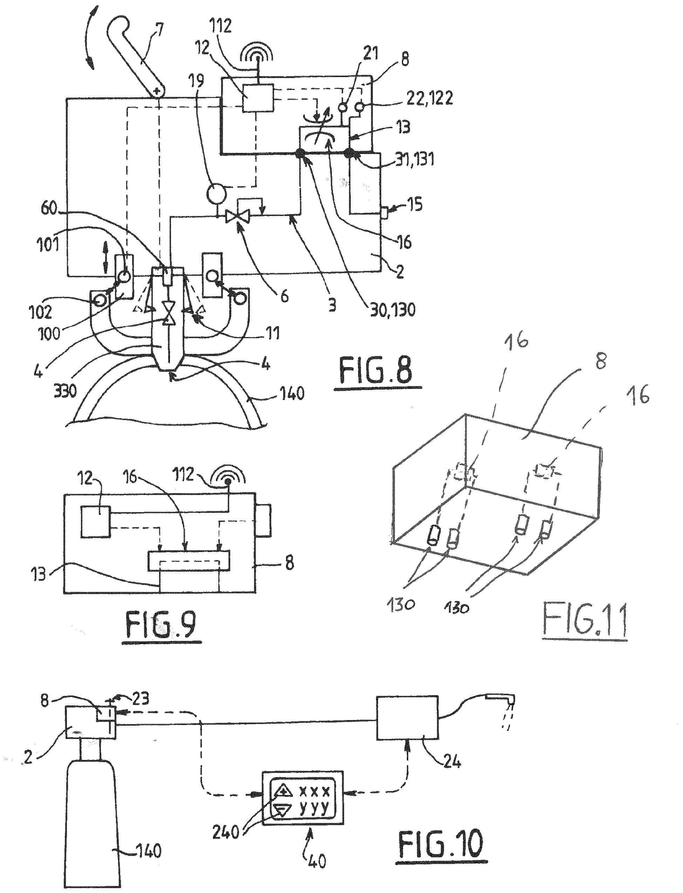

Le circuit 3, 13 de fluide (notamment pour du gaz sous pression) a une extrémité 4 amont destinée à être mise en relation avec une réserve de fluide sous pression (par exemple une bouteille 14 ou un ensemble de bouteilles de gaz sous pression, cf. figure 8).

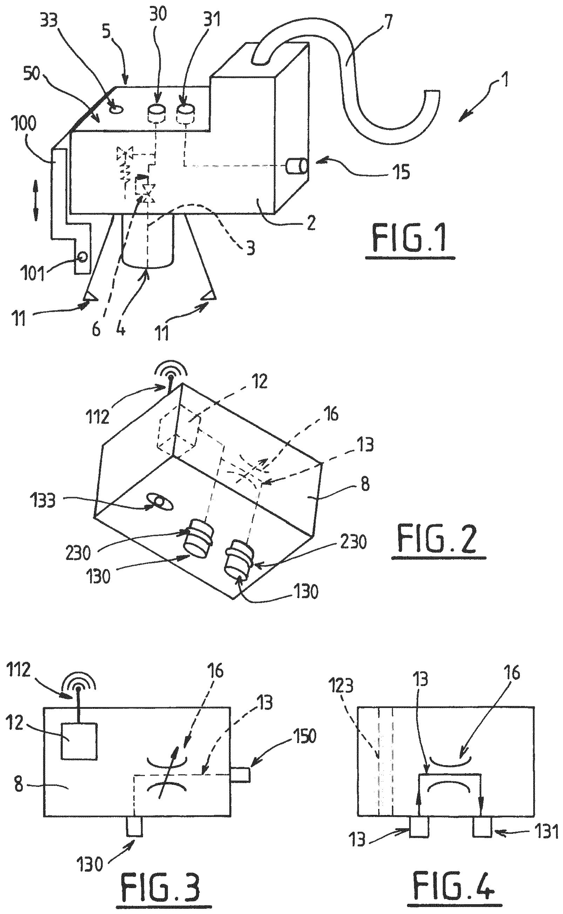

Le circuit 3, 13 comprend au moins une extrémité aval (15 cf. figure 1 ; 150 cf. figure 3) destinée à être mise en relation avec un appareil récepteur du gaz, par exemple un appareil 24 de soudage ou autre (cf. figure 10).

Classiquement le circuit 3, 13 comprend au moins un organe 6, 60 de contrôle du débit dans le circuit 3, 13.

Dans l'exemple de la figure 1, la portion du circuit 3 située dans le corps 2 du robinet 1 comprend un détendeur de pression 6 abaissant la pression à une valeur déterminée fixe ou réglable.

Le robinet 1 comprend en outre un organe 7 d'actionnement pour commander au moins un organe de contrôle du débit (pour commander le détendeur ou une vanne d'isolation ou un pousse-clapet par exemple).

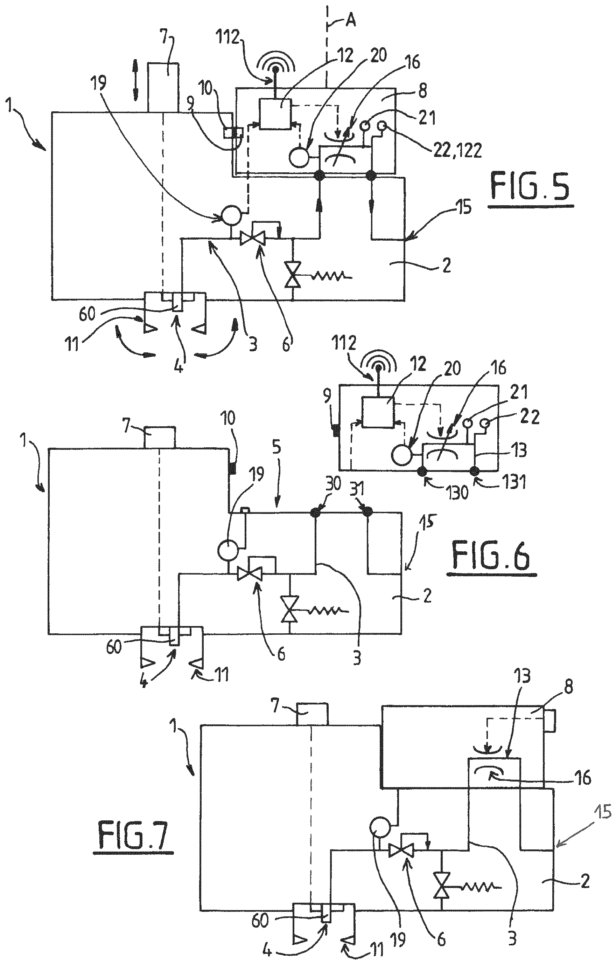

Dans l'exemple de la figure 1, l'organe 7 d'actionnement est un levier pivotant. Bien entendu, alternativement ou cumulativement, l'organe d'actionnement pourrait comprendre une pièce mobile en translation ou un volant rotatif ou un bouton (cf. par exemple figures 5 à 7).

De même, le robinet 1 n'est pas limité à l'exemple de la figure 1. Par exemple, comme illustré aux figures 5 à 8, le robinet peut comprendre en outre (ou alternativement) au détendeur 6, un pousse-clapet 60 mobile actionnable pour commander l'ouverture d'un clapet 4 d'un autre robinet 330 ou appareil auquel se raccorde le robinet 1. Ce pousse-clapet 60 peut être actionné par l'organe 7 d'actionnement.

Le robinet 1 comprend en outre un régulateur de débit 16 fixe ou réglable qui est situé dans une portion 13 du circuit fluidique logée dans un module 8 de régulation monté de façon amovible sur le corps 2.

La partie du circuit 3 abritée dans le corps 2 du robinet comprend une première extrémité débouchant sur le corps 2 au niveau d'une premier orifice 30.

La portion de circuit 13 de fluide située dans le module 8 de régulation est munie d'une extrémité amont comprenant un premier raccord 130 fluidique configuré pour se raccorder de façon étanche au niveau du premier orifice 30 lorsque le module 8 est en position montée sur le corps 2 de sorte que le régulateur de débit 16 régule le débit de fluide transitant dans le circuit 3, 13 en amont de l'extrémité 15 aval.

Le premier raccord 130 fluidique du module 8 de régulation et le premier orifice 30 du corps 2 forment un système connexion fluidique mâle-femelle comprenant un système 230 d'étanchéité tel qu'un joint torique par exemple. Par exemple, le premier raccord 130 fluidique est du type mâle et fait saillie sur le module 8 de régulation et comprend un joint 230 d'étanchéité tel qu'un joint torique.

Le circuit 3 de fluide situé dans le corps 2 comprend une première portion s'étendant entre l'extrémité 4 amont et le premier orifice 30 et une seconde portion s'étendant entre un second orifice 31 débouchant sur le corps 2 et une extrémité 15 aval de sortie munie par exemple d'un raccord.

Dans l'exemple des figures 2, 4 et 5 à 9, la portion de circuit 13 située dans le module 8 de régulation comprend une extrémité aval comprenant un second raccord 131 fluidique configuré pour se raccorder de façon étanche au niveau du second orifice 31 lorsque le module 8 de régulation est en position montée sur le corps 2. C'est-à-dire que lorsque le module 8 de régulation est en position montée sur le corps 2, la portion de circuit 13 du module 8 de régulation assure ainsi une liaison fluidique entre la première portion et la seconde portion du circuit 3 du corps 2 et la régulation du flux de fluide via le régulateur 16 de débit. C'est-à-dire que le gaz fait un passage dans le module 8 de régulation avant de revenir dans le corps 2.

Dans ce cas de figure, le gaz dont le débit a été régulé sort au niveau d'une extrémité 15 sur le corps 2.

Comme pour le premier raccord 130, le second raccord 131 fluidique du module 8 de régulation et le second orifice 31 du corps 2 forment un système de connexion fluidique mâle-femelle comprenant un système 230 d'étanchéité tel qu'un joint torique (par exemple du même type que pour le premier raccord 130).

Ceci confère une connexion mécanique et fluidique fiable et sûre entre ces deux entités 2, 8.

Comme illustré, de préférence le corps 2 du robinet 1 comprend un logement 5 destiné à accueillir le module 8 de régulation. Le logement 5 comprend un fond 50 sensiblement horizontal lorsque le robinet 1 est en position verticale d'utilisation. Le fond 50 est destiné à recevoir la base (face inférieure) du module 8 de régulation lorsque le module 8 de régulation est en position montée sur le corps 2. Comme illustré, de préférence le premier 30 et le second orifice 31 débouchent au niveau dudit fond 50 du logement 5.

Ainsi, les deux raccords 130, 131 du module de régulation sont situés sur la face inférieure de ce dernier.

Cette agencement améliore la tenue et la protection des connexions fluidiques (30-130, 31-131) et participe au bon positionnement et maintien du module 8 sur le corps 2.

Le module 8 de régulation est maintenu sur le corps 2 par encliquetage et/ou par des organes de maintien amovibles tel qu'un système de vis et écrou(s) ou taraudage (cf. par exemple réf. 123, 23 figures 4 et 10).

Comme illustré à la figure 3, le module 8 régulateur peut comporter un unique raccord 130 d'entrée destiné à coopérer avec le premier orifice 30 et un raccord de sortie 150 situé sur le module 8. C'est-à-dire que le fluide provenant du premier orifice 30 ne repasse pas dans le corps 2 du robinet.

Le régulateur de débit 16 situé dans le module 8 de régulation peut être un régulateur de débit fixe (cf. figure 4) ou variable (cf. figures 2 et 3 notamment).

De préférence, le régulateur 16 de débit est commandé par un organe 12 électronique d'acquisition et de traitement de données de préférence intégré au module 8 et comprend une antenne 112 configurée pour recevoir un signal de commande à distance du régulateur de débit 16 pour contrôler et modifier à distance le débit imposé par ce dernier.

Le robinet 1 peut comprendre au moins un capteur 19, 20, 21, 122 de pression (ou autre) configuré pour mesurer au moins la pression dans le circuit 3. Au moins un capteur 19 peut être relié à un raccord 33 électrique débouchant sur le corps 2 dans le logement 5, par exemple de façon adjacente aux orifices 30, 31.

Pour transmettre ces données à l'organe 12 électronique d'acquisition, le module 8 de régulation peut comprendre sur sa surface inférieure un raccord 133 électrique conjugué relié à l'organe 12 électronique d'acquisition et de traitement de données et configuré. Ces deux raccords électriques sont configurés pour transmettre l'information de mesure du capteur 19 vers l'organe 12 électronique d'acquisition et de traitement de données lorsque le module 8 de régulation est en position montée sur le corps 2.

Le régulateur de débit 16 comprend par exemple un mécanisme d'orifice variable de type piézoélectrique ou un mécanisme d'orifice variable à tiroir mobile, ou tout autre système approprié.

Comme illustré aux figures 1 et 8, le robinet 1 peut comprendre au moins un premier organe 101 fonctionnel électronique destiné à échanger des données avec l'organe 12 électronique du module 8 de régulation. A cet effet, le corps 2 du robinet peut comprendre un dispositif 10 de contact(s) situés dans le logement 5 destiné à coopérer avec un jeu de contact(s) électrique(s) 9 conjugué situé sur le module 8 de régulation lorsque ce dernier est en position montée sur le corps 2 du robinet (cf. figure 5 et 6 qui schématisent ces contacts électriques).

Par exemple, le module 8 de régulation est mobile en translation selon une première direction A (cf. figure 5) par rapport au logement 5 entre une position montée et une position démontée par rapport au corps 2. De préférence, le dispositif 10 de contact(s) est disposé sur une paroi du logement située dans un plan parallèle à ladite première direction A. Ainsi, le contact entre le dispositif 10 de contact(s) et le jeu de contact(s) électrique(s) 9 conjugué s'effectue selon un plan parallèle à la première direction A.

De cette façon, lorsque le module 8 est correctement monté sur le corps 2 du robinet il s'établit une liaison électrique physique permettant la transmission de données ou d'énergie par exemple.

Comme illustré aux figures 1 et 5 et notamment à la figure 8, le robinet 1 peut comprendre une extrémité de montage comprenant des organes 11 mobiles d'accrochage destinés à coopérer avec des organes d'accrochage complémentaires pour former un système de connexion rapide du robinet 1 sur un autre robinet 330 ou sur un circuit de fluide. Le robinet 1 peut comprendre une pièce support 100 mobile sur le corps formant un organe d'actionnement des organes 11 mobiles d'accrochage tel qu'un organe de verrouillage et/ou de déverrouillage des organes 11 mobiles d'accrochage.

De plus, le robinet 1 peut comprendre un support d'information ou un lecteur électronique sans fil configuré pour échanger des informations sans fil avec un autre support 102 d'information électronique tel qu'une radio-étiquette ou un transpondeur (à communication à champ proche « NFC » par exemple).

Ces supports de données peuvent comprendre un transpondeur passif sans dispositif générateur d'ondes électromagnétiques, un transpondeur actif comprenant un dispositif générateur d'ondes électromagnétiques, le transpondeur comprenant une mémoire électronique à lecture de données seule ou à lecture et (ré)écriture de données, avec ou sans batterie.

C'est-à-dire que des informations (nature du gaz, références de la bouteille...) peuvent être transmise sans fil entre la bouteille 140 ou l'ensemble de bouteilles et robinet 1 puis le module 8 via les transpondeurs 102, 101.

De plus, comme illustré aux figures 1 et 8, le dispositif électronique de communication peut être logé dans le support 100 mobile.

Comme illustré schématiquement à la figure 11, le module 8 peut comporter deux (ou plus) jeux distincts de raccord(s) 130 fluidiques reliés respectivement à des organes 16 de contrôle du débit respectifs (par exemple des régulateurs de débit, des détendeurs ou autre) permettant plusieurs configurations d'utilisation du module 8 selon que le module 8 est raccordé au robinet via l'un ou l'autre des jeux de raccords 130. Ainsi, par exemple, selon que le module 8 est raccordé au robinet dans un sens ou dans un autre sens (via l'un ou l'autre des jeux de raccords 130), le débit de gaz est par exemple régulé à des niveaux différents déterminés.

Par exemple chaque jeu de raccord(s) 130 est associé à un organe 16 de régulation différent (orifice calibré de section différente par exemple). Par exemple, les jeux de raccord(s) 130 sont disposés de façon symétrique par rapport au centre de la face inférieure du module 8.

Ainsi, l'opérateur peut choisir tel ou tel organe 16 de contrôle en utilisant les raccords 130 associés (les positions respectives peuvent être associées à un marquage sur le module 8).

## Revendications

1. Dispositif de fourniture de fluide comprenant un robinet pour fluide sous pression, avec ou sans détendeur de pression intégré, comprenant un corps (2), un circuit (3, 13) de fluide abrité au moins en partie dans le corps (2), le circuit (3, 13) ayant une extrémité (4) amont destinée à être mise en relation avec une réserve de fluide sous pression et une extrémité (15, 150) aval destinée à être mise en relation avec un appareil récepteur, le circuit (3, 13) comprenant au moins un organe (6, 60) de contrôle du débit dans le circuit (3, 13), le robinet (1) comprenant un organe (7) d'actionnement pour commander au moins un organe (6, 60, 16) de contrôle du débit, le au moins un organe (6, 60) de contrôle comprenant un régulateur de débit (16) fixe ou réglable, le régulateur de débit (16) étant situé dans une portion de circuit (13) fluidique logée dans un module (8) de régulation monté de façon amovible sur le corps (2), le circuit (3) abrité dans le corps (2) comprenant une première extrémité débouchant sur le corps (2) au niveau d'une premier orifice (30), la portion de circuit (13) de fluide du module (8) de régulation étant munie d'une extrémité amont comprenant un premier raccord (130) fluidique configuré pour se raccorder de façon étanche au niveau du premier orifice (30) lorsque le module (8) est en position montée sur le corps (2) de sorte que le régulateur de débit (16) régule le débit de fluide transitant dans le circuit (3, 13) en amont de l'extrémité (15, 150) aval, **caractérisé en ce que** le circuit (3) de fluide situé dans le corps (2) comprend une première portion s'étendant entre l'extrémité (4) amont et le premier orifice (30) et une seconde portion s'étendant entre un second orifice (31) débouchant sur le corps (2) et l'extrémité (15) aval, la portion de circuit (13) du module (8) de régulation comprenant une extrémité aval comprenant un second raccord (131) fluidique configuré pour se raccorder de façon étanche au niveau du second orifice (31) lorsque le module (8) de régulation est en position montée sur le corps (2), de sorte que, lorsque le module (8) de régulation est en position montée sur le corps (2), la portion de circuit (13) du module (8) de régulation assure une liaison fluidique entre la première portion et la seconde portion du circuit (3) du corps (2) et la régulation du flux de fluide via le régulateur (16) de débit.

2. Dispositif selon la revendication 1, **caractérisé en ce que** le premier raccord (130) fluidique du module (8) de régulation et le premier orifice (30) du corps (2) forment un système connexion fluidique mâle-femelle comprenant un système (230) d'étanchéité tel qu'un joint torique.

3. Dispositif selon la revendication 1 ou 2, **caractérisé en ce que** le premier raccord (130) fluidique fait saillie sur le module (8) de régulation et comprend un joint (230) d'étanchéité tel qu'un joint torique.

4. Dispositif selon l'une quelconque des revendications 1 à 3, **caractérisé en ce que** l'extrémité (150) aval du circuit (3, 13) débouche sur le module (8) régulateur et est munie d'un raccord de sortie mâle ou femelle.

5. Dispositif selon l'une quelconque des revendications 1 à 4, **caractérisé en ce que** l'extrémité (15) aval débouche sur le corps (2) et est munie d'un raccord de sortie mâle ou femelle.

6. Dispositif selon l'une quelconque des revendications 1 à 5, **caractérisé en ce que** le second raccord (131) fluidique du module (8) de régulation et le second orifice (31) du corps (2) forment un système de connexion fluidique mâle-femelle comprenant un système (230) d'étanchéité tel qu'un joint torique.

7. Dispositif selon l'une quelconque des revendications 1 à 6, **caractérisé en ce que** le corps (2) du robinet (1) comprend un logement (5) destiné à accueillir le module (8) de régulation, le logement (5) comprenant un fond (50) horizontal lorsque le robinet (1) est en position verticale d'utilisation, le fond (50) étant destiné à recevoir une base du module (8) de régulation lorsque le module (8) de régulation est en position montée sur le corps (2), et **en ce que** le premier orifice (30) débouche au niveau dudit fond (50) du logement (5).

8. Dispositif selon l'une quelconque des revendications 1 à 6 prise en combinaison avec la revendication 7, **caractérisé en ce que** le second orifice (31) débouche au niveau dudit fond (50) du logement (5).

9. Dispositif selon l'une quelconque des revendications 1 à 8, **caractérisé en ce que** le régulateur de débit (16) situé dans le module (8) de régulation est un régulateur de débit variable commandé par un organe (12) électronique d'acquisition et de traitement de données intégré au robinet (1) et comprenant une antenne (112) configurée pour recevoir un signal de commande à distance du régulateur de débit (16) pour contrôler et modifier à distance le débit imposé par ce dernier.

10. Dispositif selon la revendication 9 prise en combinaison avec l'une quelconque des revendications 7 ou 8, **caractérisé en ce que** l'organe (12) électronique d'acquisition et de traitement de données est au moins partiellement logé dans le module (8) de régulation et **en ce que** le dispositif comprend un capteur (19) de pression configuré pour mesurer la pression dans le circuit (3) dans le corps (2), ledit capteur (19) de pression étant relié à un raccord (33) électrique débouchant sur le corps (2) dans le logement (5) et **en ce que** le module (8) de régulation comprend sur sa surface extérieur un raccord (133) électrique conjugué relié à l'organe (12) électronique d'acquisition et de traitement de données et configuré pour transmettre l'information de mesure du capteur (19) de pression vers l'organe (12) électronique d'acquisition et de traitement de données lorsque le module (8) de régulation est en position montée sur le corps (2).

11. Dispositif selon l'une quelconque des revendications 1 à 10, **caractérisé en ce que** le module (8) de régulation est maintenu sur le corps par encliquetage et/ou par des organes (123, 23) de maintien amovibles tel qu'un système de vis et écrou(s) ou taraudage.

12. Dispositif selon l'une quelconque des revendications 1 à 11 **caractérisé en ce que** le régulateur de débit comprend au moins l'un parmi : un orifice calibré fixe, un orifice à taille réglable, un mécanisme d'orifice variable de type piezoélectrique, un mécanisme d'orifice variable de type à tiroir mobile.

13. Module (8) de régulation de débit de gaz destiné à être relié de façon amovible au corps (2) d'un robinet pour fluide sous pression d'un dispositif conforme à l'une quelconque des revendications 1 à 12, comprenant un boîtier abritant un circuit (13) fluidique comprenant une première extrémité amont débouchant sur le corps (2) au niveau du premier orifice (30) et une seconde extrémité aval débouchant au niveau d'un orifice aval (150, 131), le circuit (13) comprenant un régulateur de débit (16) destiné à réguler le débit de fluide circulant dans ledit circuit, le premier orifice (30) débouchant sur une face horizontale inférieure du boîtier et comprenant un premier raccord (130) fluidique configuré pour se raccorder de façon étanche au niveau du premier orifice (30) conjugué d'un robinet, le boîtier (8) étant muni d'organe(s) d'accrochage par encliquetage et/ou configurés pour coopérer avec un système de vis et écrou(s) ou taraudage pour assurer le montage du boîtier sur un robinet, **caractérisé en ce que** le circuit (13) du module (8) de régulation comprenant une extrémité aval comprend un second raccord (131) fluidique configuré pour se raccorder de façon étanche au niveau du second orifice (31), le second raccord (131) étant situé sur la face horizontale inférieure du boîtier.

14. Module (8) de régulation selon la revendication 13, **caractérisé en ce que** le régulateur de débit (16) est un régulateur de débit variable commandé par un organe (12) électronique d'acquisition et de traitement de données intégré au robinet (1) et comprenant une antenne (112) configurée pour recevoir un signal de commande à distance du régulateur de débit (16) pour contrôler et modifier à distance le débit imposé par ce dernier.

## Patentansprüche

1. Vorrichtung zur Fluidzuführung, umfassend einen Schließhahn für unter Druck stehendes Fluid, mit oder ohne integrierten Druckminderer, umfassend einen Körper (2), einen Fluidkreislauf (3, 13), der zumindest teilweise im Körper (2) untergebracht ist, wobei der Kreislauf (3, 13) ein stromaufwärtiges Ende (4), dazu bestimmt, mit einem Speicher von unter Druck stehendem Fluid verknüpft zu werden, und ein stromabwärtiges Ende (15, 150), dazu bestimmt, mit einer Aufnahmeeinrichtung verknüpft zu werden, aufweist, wobei der Kreislauf (3, 13) mindestens ein Durchsatzsteuerorgan (6, 60) im Kreislauf (3, 13) umfasst, wobei der Schließhahn (1) ein Betätigungsorgan (7) zum Steuern mindestens eines Durchsatzsteuerorgans (6, 60, 16) umfasst, wobei das mindestens eine Steuerorgan (6, 60) einen feststehenden oder einstellbaren Durchsatzregler (16) umfasst, wobei der Durchsatzregler (16) in einem Fluidkreislaufabschnitt (13) angeordnet ist, der in einem Regelmodul (8) eingesetzt ist, das lösbar auf dem Körper (2) angebracht ist, wobei der im Körper (2) untergebrachte Kreislauf (3) ein erstes Ende umfasst, das im Bereich einer ersten Öffnung (30) in den Körper (2) mündet, wobei der Fluidkreislaufabschnitt (13) des Regelmoduls (8) mit einem stromaufwärtigen Ende versehen ist, das einen ersten Fluidstutzen (130) umfasst, der konfiguriert ist, um sich im Bereich der ersten Öffnung (30) dicht anzuschließen, wenn sich das Modul (8) in auf dem Körper (2) angebrachter Position befindet, so dass der Durchsatzregler (16) den Durchsatz von in dem Kreislauf (3, 13) stromaufwärts des stromabwärtigen Endes (15, 150) strömendem Fluid reguliert, **dadurch gekennzeichnet, dass** der im Körper (2) befindliche Fluidkreislauf (3) einen ersten Abschnitt umfasst, der sich zwischen dem stromaufwärtigen Ende (4) und der ersten Öffnung (30) erstreckt, und einen zweiten Abschnitt, der sich zwischen einer zweiten Öffnung (31), die in den Körper (2) mündet, und dem stromabwärtigen Ende (15) erstreckt, wobei der Kreislaufabschnitt (13) des Regelmoduls (8) ein stromabwärtiges Ende umfasst, das einen zweiten Fluidstutzen (131) umfasst, der konfiguriert ist, um sich im Bereich der zweiten Öffnung (31) dicht anzuschließen, wenn sich das Regelmodul (8) in der auf dem Körper (2) angebrachten Position befindet, so dass, wenn sich das Regelmodul (8) in der auf dem Körper (2) angebrachten Position befindet, der Kreislaufabschnitt (13) des Regelmoduls (8) eine Fluidverbindung zwischen dem ersten und zweiten Abschnitt des Kreislaufs (3) des Körpers (2) und die Regelung der Fluidströmung über den Durchsatzregler (16) sicherstellt.

2. Vorrichtung nach Anspruch 1, **dadurch gekennzeichnet, dass** der erste Fluidstutzen (130) des Regelmoduls (8) und die erste Öffnung (30) des Körpers (2) ein Fluid-Steckverbindersystem bilden, das ein Dichtungssystem (230) wie einen O-Ring umfasst.

3. Vorrichtung nach Anspruch 1 oder 2, **dadurch gekennzeichnet, dass** der erste Fluidstutzen (130) über dem Regelmodul (8) vorspringt und eine Dichtungsverbindung (230) wie einen O-Ring umfasst.

4. Vorrichtung nach einem der Ansprüche 1 bis 3, **dadurch gekennzeichnet, dass** das stromabwärtige Ende (150) des Kreislaufs (3, 13) in das Regelmodul (8) mündet und mit einem Steck- oder Buchsenausgangsstutzen versehen ist.

5. Vorrichtung nach einem der Ansprüche 1 bis 4, **dadurch gekennzeichnet, dass** das stromabwärtige Ende (15) in den Körper (2) mündet und mit einem Steck- oder Buchsenausgangsstutzen versehen ist.

6. Vorrichtung nach einem der Ansprüche 1 bis 5, **dadurch gekennzeichnet, dass** der zweite Fluidstutzen (131) des Regelmoduls (8) und die zweite Öffnung (31) des Körpers (2) ein Fluid-Steckverbindersystem bilden, das ein Dichtungssystem (230) wie einen O-Ring umfasst.

7. Vorrichtung nach einem der Ansprüche 1 bis 6, **dadurch gekennzeichnet, dass** der Körper (2) des Schließhahns (1) eine Aufnahme (5) zur Aufnahme des Regelmoduls (8) umfasst, wobei die Aufnahme (5) einen horizontalen Boden (50) umfasst, wenn sich der Schließhahn (1) in der vertikalen Nutzungsposition befindet, wobei der Boden (50) dazu bestimmt ist, eine Basis des Regelmoduls (8) aufzunehmen, wenn das Regelmodul (8) in auf dem Körper (2) angebrachter Position ist, und dadurch, dass die erste Öffnung (30) im Bereich des Bodens (50) der Aufnahme (5) mündet.

8. Vorrichtung nach einem der Ansprüche 1 bis 6 in Kombination mit Anspruch 7, **dadurch gekennzeichnet, dass** die zweite Öffnung (31) im Bereich des Bodens (50) der Aufnahme (5) mündet.

9. Vorrichtung nach einem der Ansprüche 1 bis 8, **dadurch gekennzeichnet, dass** der im Regelmodul (8) befindliche Durchsatzregler (16) ein variabler Durchsatzregler ist, der durch ein in den Schließhahn (1) integriertes elektronisches Datenerfassungs- und Verarbeitungsorgan (12) gesteuert wird und eine Antenne (112) umfasst, die konfiguriert ist, um ein Fernsteuersignal des Durchsatzreglers (16) zu empfangen, um den durch diesen Letzteren auferlegten Durchsatz aus der Ferne zu steuern und zu modifizieren.

10. Vorrichtung nach Anspruch 9 in Kombination mit einem der Ansprüche 7 oder 8, **dadurch gekennzeichnet, dass** das elektronische Datenerfassungs- und Verarbeitungsorgan (12) zumindest teilweise im Regelmodul (8) eingesetzt ist, und dadurch, dass die Vorrichtung einen Drucksensor (19) umfasst, der konfiguriert ist, um den Druck im Kreislauf (3) im Körper (2) zu messen, wobei der Drucksensor (19) mit einem elektrischen Stutzen (33) verbunden ist, der in der Aufnahme (5) in den Körper (2) mündet, und dadurch, dass das Regelmodul (8) auf seiner äußeren Oberfläche einen zugeordneten elektrischen Stutzen (133) umfasst, der mit dem elektronischen Datenerfassungs- und Verarbeitungsorgan (12) verbunden ist und konfiguriert ist, um die Messinformation des Drucksensors (19) an das elektronische Datenerfassungs- und Verarbeitungsorgan (12) zu übertragen, wenn sich das Regelmodul (8) in auf dem Körper (2) angebrachter Position befindet.

11. Vorrichtung nach einem der Ansprüche 1 bis 10, **dadurch gekennzeichnet, dass** das Regelmodul (8) auf dem Körper durch Einrasten und/oder durch lösbare Halteorgane (123, 23) wie ein Schrauben-und-Mutter(n)-System oder ein Gewindesystem gehalten wird.

12. Vorrichtung nach einem der Ansprüche 1 bis 11, **dadurch gekennzeichnet, dass** der Durchsatzregler mindestens eines umfasst aus: einer feststehenden kalibrierten Öffnung, einer Öffnung mit einstellbarer Größe, einem variablen Öffnungsmechanismus vom piezoelektrischen Typ, einem variablen Öffnungsmechanismus vom beweglichen Schiebetyp.

13. Modul (8) zur Regelung des Gasdurchsatzes, dazu bestimmt, lösbar mit dem Körper (2) eines Schließhahns für unter Druck stehendes Fluid einer Vorrichtung nach einem der Ansprüche 1 bis 12 verbunden zu werden, umfassend ein Gehäuse, in dem ein Fluidkreislauf (13) untergebracht ist, der ein erstes stromaufwärtiges Ende, das im Bereich der ersten Öffnung (30) in den Körper (2) mündet, und ein zweites stromabwärtiges Ende, das im Bereich einer stromabwärtigen Öffnung (150, 131) mündet, umfasst, wobei der Kreislauf (13) einen Durchsatzregler (16), dazu bestimmt, den Durchsatz von in dem Kreislauf strömendem Fluid zu regeln, umfasst, wobei die erste Öffnung (30) in eine untere horizontale Seite des Gehäuses mündet und einen ersten Fluidstutzen (130) umfasst, der konfiguriert ist, um sich im Bereich der ersten Öffnung (30), die einem Schließhahn zugeordnet ist, dicht anzuschließen, wobei das Gehäuse (8) mit einem oder mehreren Organen versehen ist, zur Befestigung durch Einrasten und/oder konfiguriert, um mit einem Schrauben-und-Mutter(n)-System oder einem Gewindesystem zusammenzuwirken, um die Anbringung des Gehäuses auf einem Schließhahn sicherzustellen, **dadurch gekennzeichnet, dass** der Kreislauf (13) des Regelmoduls (8) ein stromabwärtiges Ende umfasst, das einen zweiten Fluidstutzen (131) umfasst, der konfiguriert ist, um sich im Bereich der zweiten Öffnung (31) dicht anzuschließen, wobei der zweite Stutzen (131) auf der unteren horizontalen Seite des Gehäuses angeordnet ist.

14. Modul (8) zur Regelung nach Anspruch 13, **dadurch gekennzeichnet, dass** der Durchsatzregler (16) ein variabler Durchsatzregler ist, der durch ein in den Schließhahn (1) integriertes elektronisches Datenerfassungs- und Verarbeitungsorgan (12) gesteuert wird und eine Antenne (112) umfasst, die konfiguriert ist, um ein Fernsteuersignal des Durchsatzreglers (16) zu empfangen, um den durch diesen Letzteren auferlegten Durchsatz aus der Ferne zu steuern und zu modifizieren.

## Claims

1. Device for supplying fluid comprising a tap for pressurised fluid, with or without built-in pressure reducing valve, comprising a body (2), a circuit (3, 13) for fluid housed at least partially in the body (2), the circuit (3, 13) having an upstream end (4) intended to be connected with a reserve of pressurised fluid and a downstream end (15, 150) intended to be connected with a receiving device, the circuit (3, 13) comprising at least one member (6, 60) for controlling the flow in the circuit (3, 13), the tap (1) comprising an actuating member (7) for controlling at least one member (6, 60, 16) for controlling the flow, with the at least one controlling member (6, 60) comprising a fixed or adjustable flow regulator (16), with the flow regulator (16) being located in a portion of the fluid circuit (13) housed in a regulation module (8) removably mounted on the body (2), the circuit (3) housed in the body (2) comprising a first end opening onto the body (2) on a first orifice (30), with the portion of fluid circuit (13) of the regulation module (8) being provided with an upstream end comprising a first fluid connector (130) configured to connect in a sealed manner at the level of the first orifice (30) when the module (8) is in mounted position on the body (2) such that the flow regulator (16) regulates the flow of fluid passing into the circuit (3, 13) upstream of the downstream end (15, 150), **characterised in that** the circuit (3) for fluid located in the body (2) comprises a first portion extending between the upstream end (4) and the first orifice (30) and a second portion extending between a second orifice (31) opening onto the body (2) and the downstream end (15), the portion of the circuit (13) of the regulation module (8) comprising a downstream end comprising a second fluid connector (131) configured to connect in a sealed manner at the level of the second orifice (31) when the regulation module (8) is in mounted position on the body (2), such that, when the regulation module (8) is in mounted position on the body (2), the portion of the circuit (13) of the regulation module (8) provides a fluidic connection between the first portion and the second portion of the circuit (3) of the body (2) and the regulation of the flow of fluid via the flow regulator (16).

2. Device according to claim 1, **characterised in that** the first fluid connector (130) of the regulation module (8) and the first orifice (30) of the body (2) form a male-female fluidic connection system comprising a sealing system (230) such as an O-ring.

3. Device according to claim 1 or 2, **characterised in that** the first fluid connector (130) protrudes onto the regulation module (8) and comprises a seal (230) such as an O-ring.

4. Device according to any one of claims 1 to 3, **characterised in that** the downstream end (150) of the circuit (3, 13) opens onto the regulator module (8) and is provided with a male or female outlet connector.

5. Device according to any one of claims 1 to 4, **characterised in that** the downstream end (15) opens onto the body (2) and is provided with a male or female outlet connector.

6. Device according to any one of claims 1 to 5, **characterised in that** the second fluid connector (131) of the regulation module (8) and the second orifice (31) of the body (2) form a male-female fluidic connection system comprising a sealing system (230) such as an O-ring.

7. Device according to any one of claims 1 to 6, **characterised in that** the body (2) of the tap (1) comprises a housing (5) intended to receive the regulation module (8), with the housing (5) comprising a horizontal bottom (50) when the tap (1) is in the vertical position of use, the bottom (50) being intended to receive a base of the regulation module (8) when the regulation module (8) is in mounted position on the body (2), and **in that** the first orifice (30) opens onto said bottom (50) of the housing (5).

8. Device according to any one of claims 1 to 6 combined with claim 7, **characterised in that** the second orifice (31) opens onto said bottom (50) of the housing (5).

9. Device according to any one of claims 1 to 8, **characterised in that** the flow regulator (16) located in the regulation module (8) is a variable flow regulator controlled by an electronic member (12) for data acquisition and processing built into the tap (1) and comprising an antenna (112) configured to receive a remote control signal from the flow rate regulator (16) to remotely control and modify the flow imposed by the latter.

10. Device according to claim 9 combined with any one of claims 7 or 8, **characterised in that** the electronic member (12) for data acquisition and processing is at least partially housed in the regulation module (8) and **in that** the device comprises a pressure sensor (19) configured to measure the pressure in the circuit (3) in the body (2), said pressure sensor (19) being connected to an electrical connector (33) opening onto the body (2) in the housing (5) and **in that** the regulation module (8) comprises on the outer surface thereof a conjugated electrical connector (133) connected to the electronic member (12) for data acquisition and processing and configured to transmit the measurement information from the pressure sensor (19) to the electronic member (12) for data acquisition and processing when the regulation module (8) is in mounted position on the body (2).

11. Device according to any one of claims 1 to 10, **characterised in that** the regulation module (8) is maintained on the body by snap-fitting and/or removable maintaining members (123, 23) such as a system of screw(s) and nut(s) or threading.

12. Device according to any one of claims 1 to 11, **characterised in that** the flow regulator comprises at least one from among: a fixed calibrated orifice, an orifice with an adjustable size, a variable orifice mechanism of the piezoelectric type, a variable orifice mechanism of the mobile compartment type.

13. Module (8) for regulating the flow of gas intended to removably connected to the body (2) of a tap for pressurised fluid of a device according to any one of claims 1 to 12, comprising a case housing a fluid circuit (13) comprising a first upstream end opening onto the body (2) on first orifice (30) and a second downstream end opening onto a downstream orifice (150, 131), the circuit (13) comprising a flow regulator (16) intended to regulate the flow of fluid circulating in said circuit, the first orifice (30) opening onto a lower horizontal face of the case and comprising a first fluid connector (130) configured to connect in a sealed manner at the level of the first orifice (30) conjugated with a tap, the case (8) being provided with fastening member(s) by snap-fitting and/or configured to engage with a system of screw(s) and nut(s) or threading to provide the mounting of the case on a tap, **characterised in that** the circuit (13) of the regulation module (8) comprising a downstream end comprises a second fluid connector (131) configured to connect in a sealed manner at the level of the second orifice (31), the second connector (131) being located on the lower horizontal face of the case.

14. Regulation module (8) according to claim 13, **characterised in that** the flow regulator (16) is a variable flow rate regulator controlled by an electronic member (12) for data acquisition and processing built into the tap (1) and comprising an antenna (112) configured to receive a remote control signal from the flow regulator (16) to remotely control and modify the flow imposed by the latter.
